# EUROPÄISCHE PATENTSCHRIFT

(11) **EP 2 039 963 B1**
(45) Veröffentlichungstag und Bekanntmachung des Hinweises auf die Patenterteilung: **08.12.2010**
(21) Anmeldenummer: 07018358.7
(22) Anmeldetag: 19.09.2007
(51) Int. Cl.: F16H 61/00, B01D 29/05, F16J 15/10

(54) **Separatorplatte**
Separator board
Plaque de séparateur

(43) Veröffentlichungstag der Anmeldung: 25.03.2009
(73) Patentinhaber: Carl Freudenberg KG, 69469 Weinheim (DE)
(72) Erfinder: Kohn, Jason, 69493 Hirschberg-Leutershausen (DE); Kokoszynski, Wojciech, 68159 Mannheim (DE); Trabert, Jens, 69469 Weinheim (DE)

(56) Entgegenhaltungen:
- EP-A- 0 192 593
- EP-A- 0 803 654
- WO-A-91/11248
- DE-A1- 1 955 033
- DE-A1- 3 103 464
- DE-A1- 3 238 732
- DE-A1- 3 831 255
- GB-A- 2 150 851
- JP-A- 2003 049 933
- US-A- 3 986 915

## Beschreibung

### Stand der Technik

Die EP 0 803 654 A2 zeigt eine Separatorplatte mit einem Filtermaterial, an welchem ein elastomeres Dichtmaterial angeformt ist. Das Filtermaterial, auf dem das Dichtmaterial aufgebracht ist, bildet ein Einzelteil. Aus der DE 1 955 033 A1 ist bekannt, ein Filtermaterial lediglich an seinem äußeren Rand mit einem Kunststoff einzufassen. Die DE 31 03 464 A1 offenbart ein einzeln vorliegendes Filtermaterial für Elektrodialyse-Membranstapel. Aus der GB 2 150 851 A ist ein einzelnes Filtermaterial bekannt, wobei das Dichtmaterial in Poren des Filtermaterials penetriert. Aus der JP 2003 049933 A Ist bekannt, ein Filtermaterial in einer Öffnung einer Grundplatte aufzunehmen. Aus der WO 91/11248 A ist ein einzelnes Filtermaterial bekannt. Die EP 0 192 593 A1 offenbart ein Verfahren, bei dem ein Filtermaterial derart mit Druck beaufschlagt wird, dass ein elastomeres Dichtmaterial durch das Filtermaterial penetriert. Aus der DE 32 38 732 A1 ist bekannt, ein Filtermaterial an eine mit Öffnungen versehene Elastomerplatte anzukaschieren. Aus der US 3,986,915 ist bekannt, ein Dichtmaterial auf eine Grundplatte anzuvulkanisieren. Schließlich zeigt die DE 38 31 255 A1 ein Dichtmaterial, welches vorzugsweise zelluloses Fasermaterial umfasst.

Separatorplatten der eingangs genannten Art sind aus dem Stand der Technik bereits bekannt. Diese dienen der Abtrennung, Abdichtung und fluidleitenden Verbindung von Kanalsystemen hydraulischer Steuereinheiten. Diese Steuereinheiten können bei der Steuerung von Automatikgetrieben in Kraftfahrzeugen Verwendung finden.

Üblicherweise besteht eine hydraulische Steuereinheit aus einer Steuerhälfte und einer Aktorhälfte, die durch eine Separatorplatte getrennt sind. Sowohl die Steuerhälfte als auch die Aktorhälfte weisen labyrinthartige Kanalsysteme auf, die der Fluidleitung und definierten Ansteuerung von Getriebeteilen dienen. Die Kanalsysteme liegen einander gegenüber und sind nicht deckungsgleich ausgebildet. Vielmehr können durch die Position von Kolben in der Steuerhälfte einzelne Kanäle in der Steuerhälfte freigegeben und dadurch Fluid aus Kanälen der Steuerhälfte in definierte Kanäle der Aktorhälfte verbracht werden.

Das Fluid, üblicherweise ein Öl, tritt durch freigegebene Durchgänge in der Separatorplatte in definierte Kanäle der Aktorhälfte ein und kann dadurch hydraulisch nachgelagerte Getriebeteile betätigen.

Die gattungsbildenden Separatorplatten weisen einen sandwichartigen Aufbau auf, bei dem zwei Dichtungslagen eine Grundplatte und eine Filterlage zwischen sich einschließen.

Die Fertigung der gattungsbildenden Separatorplatten ist aufwendig, fehleranfällig und teuer, da relativ viele Einzelteile, nämlich mehrere ebene Lagen, zuverlässig dichtend miteinander verbunden werden müssen. Des Weiteren weisen die gattungsbildenden Separatorplatten eine relativ große Dicke auf, weshalb sie den Einbauverhältnissen in modernen Kraftfahrzeugen häufig nicht gerecht werden.

### Darstellung der Erfindung

Der Erfindung liegt daher die Aufgabe zu Grunde, eine Separatorplatte der eingangs genannten Art derart auszugestalten und weiterzubilden, dass sie bei geringer Dicke eine hohe Stabilität gewährleistet.

Erfindungsgemäß wird die voranstehende Aufgabe mit den Merkmalen des Patentanspruchs 1 gelöst.

Erfindungsgemäß ist erkannt worden, dass eine Kombination des Filtermaterials mit dem Dichtmaterial erlaubt, die Dicke der Separatorplatte wesentlich zu verringern. Des Weiteren ist erkannt worden, dass die Stabilität der Platte erhöht wird, indem weniger Einzelteile eingesetzt werden, die sich von der Grundplatte ablösen können. Insbesondere ist erkannt worden, dass weniger Dichtebenen geschaffen werden, an denen aggressive Fluide angreifen und die Separatorplatte schädigen können. Schließlich ist erkannt worden, dass eine formschlüssige oder stoffschlüssige Verbindung von Dichtmaterial und Filtermaterial eine feste Einheit aus Dichtmaterial und Filtermaterial ausbildet.

Das zweite Dichtmaterial ist siebdrucktechnisch auf das Filtermaterial aufgetragen. Hierdurch ist ein besonders dünner flächiger Auftrag des zweiten Dichtungsmaterials auf das Filtermaterial möglich.

Das Filtermaterial ist als Gebilde aus Fäden oder Drähten ausgebildet. Hierdurch kann eine Maschen- oder Porenstruktur einstellbarer Maschenweite geschaffen werden, durch die Metallspäne oder Verunreinigungen des Fluids zurückgehalten werden können. Vor diesem Hintergrund ist denkbar, das Gebilde als Gitter, Gewebe oder Gewirke auszugestalten. Die Fäden oder Drähte könnten aus Edelstahl, Nylon oder Polyester gefertigt sein. Dieses Materialien haben sich als besonders resistent gegen aggressive Fluide wie ATF-Öle (Automatic Transmission Fluid) erwiesen.

Das zweite Dichtmaterial füllt das Gebilde zumindest teilweise aus bzw. durchdringt es. Hierdurch ist sichergestellt, dass das Dichtmaterial eine innige formschlüssige und/ oder stoffschlüssige Verbindung mit den Drähten oder Fäden des Gebildes eingeht und zugleich das Gebilde mit der Grundplatte fest verbindet. Lediglich die Durchgänge in der Separatorplatte, durch die das Fluid von der Steuerhälfte zur Aktorhälfte strömt, sind frei von zweitem Dichtmaterial. In den Durchgängen hält Filtermaterial Verunreinigungen zurück.

Die Durchgänge in der Separatorplatte dienen dem Fluidaustausch zwischen den Kanalsystemen der Steuerhälfte und der Aktorhälfte einer hydraulischen Steuereinheit. In den Durchgängen befindet sich Filtermaterial.

Folglich ist die eingangs genannte Aufgabe gelöst.

Das Filtermaterial könnte mittels einer Haftschicht mit der Grundplatte verbunden sein. Eine Haftschicht, insbesondere ein Klebstoff, erlaubt eine ebene und flache Anlage des Filtermaterials auf der Grundplatte. Hierdurch können abstehende Ecken des Filtermaterials vermieden werden, an denen das aggressive Fluid angreifen und das Filtermaterial zusammen mit dem zweiten Dichtmaterial ablösen kann.

Das zweite Dichtmaterial könnte die Fäden oder Drähte des Gebildes umhüllen. Hierdurch ist sichergestellt, dass das zweite Dichtmaterial eine Dichtwirkung zur Aktorhälfte ausbilden kann und an der Grundplatte anliegt, um mit diesem eine stoffschlüssige Verbindung einzugehen. Des Weiteren wird das Filtermaterial vor dem Angriff durch aggressive Fluide geschützt.

Das erste und/ oder das zweite Dichtmaterial könnte als Elastomer ausgebildet sein. Elastomere sind elastisch deformierbar und können geringe Unebenheiten an abzudichtenden Flächen ausgleichen. Des Weiteren können sie mit Grundplatten aus metallischen Werkstoffen ein feste Verbindung eingehen. Vor diesem Hintergrund ist denkbar, dass die Grundplatte aus Aluminium oder Edelstahl besteht. Eine kostengünstige Grundplatte könnte jedoch auch aus Kunststoff bestehen.

Das Filtermaterial könnte als Gebilde aus Fäden oder Drähten ausgebildet sein, wobei die der Grundplatte abgewandte Seite des Gebildes als Dichtmaterial ausgebildet ist. Hierdurch ist eine sehr dünne Separatorplatte realisierbar, bei der eine Seite des Filtermaterials zugleich als Dichtmaterial oder Dichtbereich wirkt. Das Filtermaterial könnte derart angeschmolzen werden, dass außer im Bereich der Durchgänge alle Poren oder Maschen verschlossen werden. Die verschmolzenen Bereiche des Filtermaterials dienen dann als Dichtmaterial.

In dem ersten und/ oder dem zweiten Dichtmaterial könnte jeweils ein Kanalsystem ausgebildet sein. Diese Kanalsysteme könnten mit den labyrinthartigen Kanalsystemen der Steuerhälfte und der Aktorhälfte korrespondieren. Hierdurch kann eine besonders gute Fluidleitung durch Kanäle relativ großen Querschnitts gewährleistet werden.

Die Separatorplatte könnte eine Dicke von höchstens 2,2 mm aufweisen. Diese äußerst geringe Dicke erlaubt den Einbau der Separatorplatte in modernen Kraftfahrzeugen, in denen für hydraulische Steuereinheiten nur ein sehr knapper Bauraum zur Verfügung steht.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung bevorzugter Ausführungsbeispiele der Erfindung anhand der Zeichnung zu verweisen.

In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine schematische Schnittansicht einer Separatorplatte, bei der das Filtermaterial mittels einer Haftmasse mit der Grundplatte verbunden ist,
- Fig. 2: eine schematische Schnittansicht einer Separatorplatte, bei der das Filtermaterial mittels des zweiten Dichtmaterials mit der Grundplatte verbunden ist,
- Fig. 3: eine schematische Schnittansicht einer Separatorplatte, bei der das Filtermaterial zugleich als zweites Dichtmaterial ausgebildet ist, und
- Fig. 4: eine rasterelektronenmikroskopische Aufnahme eines Schnitts durch eine Separatorplatte gemäß Fig. 2.

### Ausführung der Erfindung

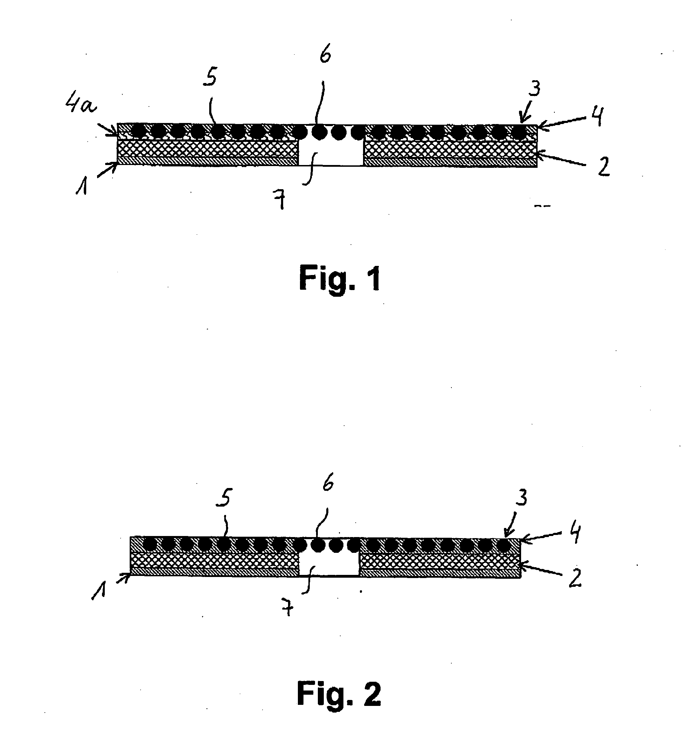

Die Fig. 1 bis 3 zeigen jeweils eine Separatorplatte für die Abdichtung und Verbindung von Kanalsystemen einer hydraulischen Steuereinheit. Jede Separatorplatte weist ein erstes Dichtmaterial 1, eine Grundplatte 2 und ein Filtermaterial 3 zur Filterung eines Fluids auf, wobei die Grundplatte 2 zwischen dem ersten Dichtmaterial 1 und dem Filtermaterial 3 positioniert ist und wobei der Grundplatte 2 filterseitig ein zweites Dichtmaterial 4 zugeordnet ist. Das zweite Dichtmaterial 4 ist zumindest teilweise in das Filtermaterial 3 integriert. Das Filtermaterial 3 ist als Gebilde 5 aus Fäden oder Drähten 6 ausgebildet.

Jede Separatorplatte der Fig. 1 bis 3 weist Durchgänge 7 zum Fluidaustausch zwischen den Kanalsystemen von Steuerhälfte und Aktorhälfte einer hydraulischen Steuereinheit auf. Jede Separatorplatte weist eine Dicke von höchstens 2,2 mm auf.

Fig. 1 zeigt eine Separatorplatte, bei der das Filtermaterial 3 mittels einer Haftschicht 4a mit der Grundplatte 2 verbunden ist. Fig. 2 zeigt eine Separatorplatte, bei der das zweite Dichtmaterial 4 siebdrucktechnisch auf das Filtermaterial 3 aufgetragen ist.

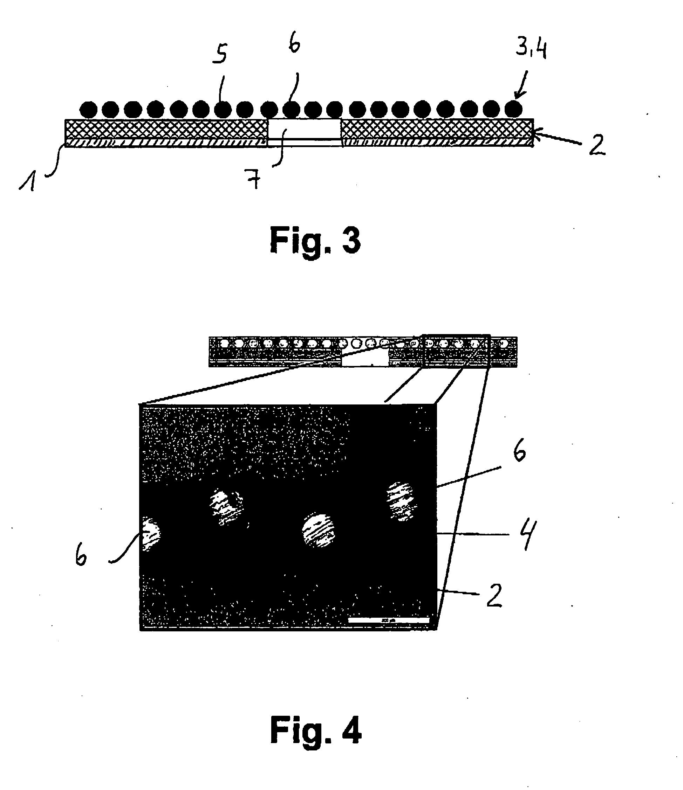

Sowohl in Fig. 1 als auch in Fig. 2 füllt das zweite Dichtmaterial 4 das Gebilde 5 zumindest teilweise aus, wobei das zweite Dichtmaterial 4 die Fäden oder Drähte 6 des Gebildes 5 formschlüssig und stoffschlüssig umhüllt. Fig. 4 zeigt dies in einer rasterelektronenmikroskopischen Aufnahme. Das zweite Dichtmaterial 4 ist als Elastomer ausgebildet.

Fig. 3 zeigt eine Separatorplatte, bei der das Filtermaterial 3 als Gebilde 5 aus Fäden oder Drähten 6 ausgebildet ist, wobei die der Grundplatte 2 abgewandte Seite des Gebildes 5 als Dichtmaterial 4 ausgebildet ist. Durch eine Heizplatte kann ein Kanalsystem direkt in das Gebilde 5 eingeprägt werden.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen. Abschließend sei ganz besonders hervorgehoben, dass die zuvor rein willkürlich ausgewählten Ausführungsbeispiele lediglich zur Erörterung der erfindungsgemäßen Lehre dienen, diese jedoch nicht auf diese Ausführungsbeispiele einschränken.

## Patentansprüche

1. Separatorplatte für die Abdichtung und Verbindung von Kanalsystemen einer hydraulischen Steuereinheit, mit einem ersten Dichtmaterial (1), einer Grundplatte (2) und einem Filtermaterial (3) zur Filterung eines Fluids, wobei die Grundplatte (2) zwischen dem ersten Dichtmaterial (1) und dem Filtermaterial (3) positioniert ist, wobei der Grundplatte (2) filterseitig ein zweites Dichtmaterial (4) zugeordnet ist, wobei das zweite Dichtmaterial (4) zumindest teilweise in das Filtermaterial (3) integriert ist, wobei das Filtermaterial (3) als Gebilde (5) aus Fäden oder Drähten (6) ausgebildet ist, wobei das zweite Dichtmaterial (4) das Gebilde (5) teilweise ausfüllt, wobei Durchgänge (7) zum Fluidaustausch dienen und sich in den Durchgängen (7) Filtermaterial (3) befindet,
**dadurch gekennzeichnet, dass**
das zweite Dichtmaterial (4) siebdrucktechnisch auf das Filtermaterial (3) aufgetragen ist, wobei das Dichtmaterial (4) eine innige formschlüssige und/ oder stoffschlüssige Verbindung mit den Fäden oder Drähten (6) des Gebildes (5) eingeht und zugleich das Gebilde (5) mit der Grundplatte (2) fest verbindet.

2. Separatorplatte nach Anspruch 1, **dadurch gekennzeichnet, dass** das erste und/ oder das zweite Dichtmaterial (1, 4) als Elastomer ausgebildet ist.

3. Separatorplatte nach Anspruch 1 oder 2, **gekennzeichnet durch** eine Dicke von höchstens 2,2 mm.

## Claims

1. Separator plate for sealing and connecting channel systems of a hydraulic control unit, with a first sealing material (1), a baseplate (2) and a filter material (3) for filtering a fluid, wherein the baseplate (2) is positioned between the first sealing material (1) and the filter material (3), wherein the baseplate (2) is assigned a second sealing material (4) on the filter side, wherein the second sealing material (4) is at least partially integrated in the filter material (3), wherein the filter material (3) is formed as a structure (5) of filaments or wires (6), wherein the second sealing material (4) partially fills the structure (5), and wherein passages (7) serve for the fluid exchange, and filter material (3) is located in the passages (7), **characterized in that** the second sealing material (4) is applied to the filter material (3) by a screen printing technique, the sealing material (4) entering into an intimate, interlocking and/or adhesively bonded connection to the filaments or wires (6) of the structure (5) and at the same time fixedly connecting the structure (5) to the baseplate (2).

2. Separator plate according to Claim 1, **characterized in that** the first and/or the second sealing material (1, 4) are/is formed as an elastomer.

3. Separator plate according to Claim 1 or 2, **characterized by** a thickness of at most 2.2 mm.

## Revendications

1. Plaque de séparateur pour l'étanchéité et la liaison de systèmes de conduit d'une unité de commande hydraulique, comprenant un premier matériau d'étanchéité (1), une plaque de base (2) et un matériau filtrant (3) pour le filtrage d'un fluide, la plaque de base (2) étant positionnée entre le premier matériau d'étanchéité (1) et le matériau filtrant (3), un second matériau d'étanchéité (4) étant associé côté filtre à la plaque de base (2), le second matériau d'étanchéité (4) étant intégré au moins partiellement dans le matériau filtrant (3), le matériau filtrant (3) étant conçu sous forme de structure (5) à base de fils ou de fils métalliques (6), le second matériau d'étanchéité (4) remplissant en partie la structure (5), des passages (7) servant à l'échange de fluide et du matériau filtrant (3) se trouvant dans les passages (7),
**caractérisée en ce que**
le second matériau d'étanchéité (4) est appliqué par sérigraphie sur le matériau filtrant (3), le matériau d'étanchéité (4) s'engageant dans une liaison intime de forme et/ou de matériau avec les fils ou fils métalliques (6) de la structure (5) et reliant en même temps fixement la structure (5) avec la plaque de base (2).

2. Plaque de séparateur selon la revendication 1, **caractérisée en ce que** le premier et/ou le second matériau(x) d'étanchéité (1, 4) est/sont conçu(s) sous forme d'élastomère.

3. Plaque de séparateur selon la revendication 1 ou 2, **caractérisée par** une épaisseur maximale de 2,2 mm.
